Europäisches Patentamt

European Patent Office

Office européen des brevets

(19)

(11) Numéro de publication: **0 008 452**
**B1**

(12) **FASCICULE DE BREVET EUROPEEN**

(45) Date de publication du fascicule de brevet: **25.11.81**

(21) Numéro de dépôt: **79103035.6**

(22) Date de dépôt: **20.08.79**

(51) Int. Cl.³: **F 16 D 55/224,**
**F 16 D 65/56**

(54) Mécanisme de commande de frein à disque.

(30) Priorité: **24.08.78 FR 7824755**

(43) Date de publication de la demande:
**05.03.80 Bulletin 80/5**

(45) Mention de la délivrance du brevet:
**25.11.81 Bulletin 81/47**

(84) Etats Contractants Désignés:
**DE GB IT NL SE**

(56) Documents cités:
**DE - B - 1 290 836**
**FR - A - 2 260 031**
**FR - A - 2 350 510**
**US - A - 2 983 338**
**US - A - 3 047 098**

(73) Titulaire: **PONT-A-MOUSSON S.A.**
**91, Avenue de la Libération**
**F-54017 Nancy (FR)**

(72) Inventeur: **Tosi, Pierre Guy**
**31 Pré Hayer**
**F-54700 Pont-a-Mousson (FR)**

(74) Mandataire: **Guy, Claude et al,**
**c/o Centre de Recherches de Pont-à-Mousson BP**
**28**
**F-54700 Pont-à-Mousson (FR)**

Courier Press, Leamington Spa, England.

Mécanisme de commande de frein à disque

La présente invention est relative à un mécanisme de commande de frein à disque applicable notamment, mais non exclusivement, à des véhicules automobiles lourds.

Plus particulièrement, l'invention se rapporte à une commande mécanique du type dans lequel les garnitures de freinage ou de friction portées par un étrier flottant de part et d'autre d'un disque à freiner sont serrées sur ce disque par l'action d'un levier faisant tourner relativement un système de cames-tambours ou cames cylindriques à rampes hélicoïdales conjuguées en vue d'obtenir un déplacement axial et une poussée sur une garniture de friction de manière à serrer les deux garnitures opposées sur le disque.

L'invention est également du type connu dans lequel un système de rattrapage automatique d'usure des garnitures de friction, du type à vis-écrou et à course perdue ainsi qu'à embrayage unidirectionnel, est interposé entre le système de cames-tambours et une garniture de friction.

Selon la demande de brevet d'invention publiée en France sous le n° 2 260 031, il est connu un mécanisme de commande de frein à disque à étrier flottant, ledit étrier comportant une mâchoire fixe portant une garniture de friction sur une face du disque et un mâchoire mobile portant une garniture de friction sur l'autre face du disque. Dans ce mécanisme, on entraîne en rotation une came-tambour, présentant une rampe hélicoïdale par rapport à une autre rampe hélicoïdale conjuguée, laquelle est formée par une surface d'une came-tambour fixe. La came-tambour rotative déplace ainsi une des garnitures de friction vers le disque à serrer par l'intermédiaire d'un système de rattrapage automatique d'usure tandis que l'autre garniture s'approche aussi du disque. Pour faciliter la rotation relative des cames-tambours, une butée helicoïdale à aiguilles, constituée par une cage de roulement annulaire coupée et déformée suivant une surface hélicoïdale, est disposée entre les rampes hélicoïdales.

Un tel mécanisme connu présente l'inconvénient que, pour fonctionner dans des conditions satisfaisantes, il faut limiter l'angle de rotation de la came-tambour rotative à une valeur assez faible. La course axiale de serrage s'en trouve alors limitée. D'ailleurs, une raison supplémentaire limite cet angle de rotation: la course du vérin d'actionnement du levier précité est elle-même limitée pour que le vérin fonctionne dans des conditions satisfaisantes.

En outre, dans le cas où une course axiale importante est nécessaire pour serrer les garnitures de friction sur le disque, on pourrait envisager de choisir un pas d'hélice plus important pour les rampes des cames-tambours et la butée à aiguilles. Mais cette solution est à écarter car, d'une part, il n'est pas possible de déformer exagérément la cage de roulement annulaire coupée de la butée à aiguilles et, d'autre part, l'usinage des rampes de cames-tambours deviendrait plus difficile.

La présente invention résout le problème de l'augmentation de la course axiale de serrage avec emploi d'une butée à aiguilles sans augmenter l'angle de rotation ni le pas des cames-tambours et sans accroître exagérément l'encombrement ni le poids du mécanisme de freinage.

L'invention a donc pour objet un mécanisme de commande de frein à disque à étrier flottant, ledit étrier comportant une mâchoire fixe portant une garniture de friction sur une face du disque et une mâchoire mobile portant une garniture de friction sur l'autre face du disque, ledit mécanisme comportant un levier moteur articulé, une première came-tambour fixe et une seconde came-tambour présentant une première rampe hélicoïdale entraînée en rotation par le levier par rapport à une autre rampe hélicoïdale conjuguée, formée par une surface de la première came-tambour, une butée à aiguilles étant disposée entre les rampes hélicoïdales, la seconde came-tambour déplaçant la garniture de friction vers le disque à serrer par l'intermédiaire d'un système de rattrapage automatique d'usure tandis que l'autre garniture de friction s'approche aussi du disque, caractérisé en ce qu'entre la seconde came-tambour et le système de rattrapage automatique d'usure est interposée une troisième came-tambour symétrique de la première came-tambour immobilisée en rotation et mobile en translation, cette troisième came-tambour présentant une rampe hélicoïdale conjuguée d'une seconde rampe hélicoïdale, symétrique et opposée à la première rampe, de la seconde came-tambour.

Grâce aux trois cames-tambours formant quatre rampes hélicoïdales, quand la seconde tourne d'un certain angle par rapport à la première fixe, elle provoque un déplacement axial d'entraînement auquel s'ajoute le déplacement axial de la troisième came-tambour sous l'effet de sa propre rampe hélicoïdale conjuguée de la rampe adjacente de la seconde came-tambour médiane rotative d'entraînement.

En d'autres termes, la seconde came-tambour rotative ou came-tambour médiane à deux rampes hélicoïdales amplifie en le doublant le déplacement axial obtenu à l'aide de la rampe de la première came-tambour fixe.

C'est ainsi que l'on obtient un déplacement axial de la garniture de friction double de celui que l'on obtiendrait à l'aide du système connu, sans modifier le pas des rampes hélicoïdales ni le diamètre des cames-tambours ni la longueur du levier moteur, ni son angle de débattement.

D'autres caractéristiques et avantages apparaîtront au cours de la description qui va suivre.

Au dessin annexé, donné uniquement à titre d'exemple:

— la Fig. 1 est une vue schématique en coupe d'un mécanisme de commande suivant l'invention en position de serrage du disque de frein;

— la Fig. 2 est une vue partielle de détail en coupe, à plus grande échelle que la Fig. 1 du système de rattrapage d'usure;

— la Fig. 3 est une vue partielle d'organes du système de rattrapage d'usure;

— la Fig. 4 est une vue en perspective des trois cames-tambours rapprochées les unes des autres;

— les Fig. 5 et 6 sont des vues schématiques en élévation des trois cames-tambours respectivement en position de serrage et en position de desserrage.

Structure générale du mécanisme de freinage:

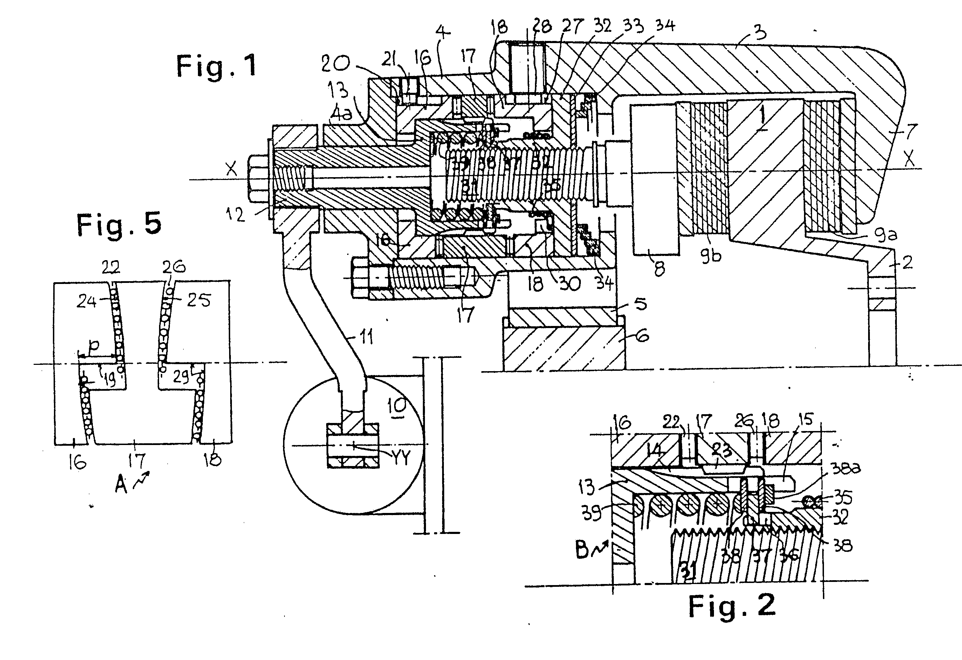

Suivant l'exemple d'exécution de la Fig. 1, l'invention est appliquée à un mécanisme de commande de frein à disque 1. Le disque 1 rotatif à deux surfaces planes actives, est porté par un flasque 2 fixé, comme connu, par des boutons sur une bride solidaire d'un moyeu de roue qui tourne. Le moyeu est porté par un essieu fixe de fusée. Ce montage, bien connu dans un véhicule automobile, n'est pas représenté. Le mécanisme de freinage est porté par un étrier flottant 3 appelé encore pince, qui est monté autour du disque de frein 1 de manière à jouir d'un degré de liberté dans une direction d'axe XX normale aux deux surfaces actives du disque 1.

A cet effet, l'étrier 3, pourvu d'un boîtier 4 à couvercle 4a logeant le mécanisme, comporte un coulisseau 5 susceptible de se déplacer dans une glissière 6 parallèle à l'axe XX et portée par l'essieu fixe non représenté.

L'étrier 3 ainsi flottant comporte une mâchoire fixe 7 et une mâchoire mobile 8 portées par le mécanisme logé dans le boîtier 4. Les mâchoires 7 et 8 portent respectivement des garnitures de friction ou de freinage 9a, 9b. Les surfaces actives des garnitures de freinage 9a, 9b sont montées de part et d'autre du disque 1 autour de l'axe XX, et leurs surfaces actives sont parallèles à celles du disque 1.

Grâce à ce montage flottant commun de l'étrier 3 par rapport au disque 1, les garnitures de friction 9a, 9b peuvent être centrées par rapport au disque 1, c'est-à-dire placées de manière équidistante tant en position desserrée qu'en position serrée.

Mécanisme de commande:
1°) *Description générale (Fig. 1):*

La mécanisme comporte pour son actionnement un vérin moteur 10 à fluide sous pression et à ressort, d'axe YY orthogonal à l'axe XX. Le vérin 10 est porté de manière non représentée par l'étrier 3. La tige de piston du vérin 10 est reliée à un levier 11 articulé autour de l'axe XX et susceptible de débattements angulaires dans un plan parallèle au disque 1 et aux garnitures de friction 9a, 9b. Le levier 11 est claveté sur un arbre moteur creux 12 d'axe XX pénétrant dans le boîtier 4.

L'arbre moteur 12 décrit plus loin en détail est solidaire en rotation d'un système A de cames-tambours destinées à transformer le mouvement de rotation de l'arbre 12 en un mouvement de translation suivant la direction de l'axe XX et à amplifier ce mouvement conformément à l'invention comme on le verra plus loin pour le transmettre à la mâchoire mobile 8 par l'intermédiaire d'un système B de rattrapage automatique d'usure des garnitures de friction 9a et 9b.

2°) *Description détaillée (Fig. 1, 2, 3, 4):*

A l'intérieur du boîtier 4, le mécanisme de commande est agencé autour de l'axe XX.

L'arbre moteur 12 se termine à l'intérieur du boîtier 4 par un moyeu 13 de diamètre sensiblement supérieur à celui de la partie de l'arbre moteur 12 traversant le boîtier 4a. Le moyeu 13 comporte des cannelures extérieures 14 d'entraînement en rotation du système A de cames-tambours. Le moyeu 13 est échancré suivant des fentes ou encoches longitudinales 15 (suivant les génératrices du moyeu 13) destinées à coopérer avec un embrayage à friction décrit plus loin du système B de rattrapage d'usure.

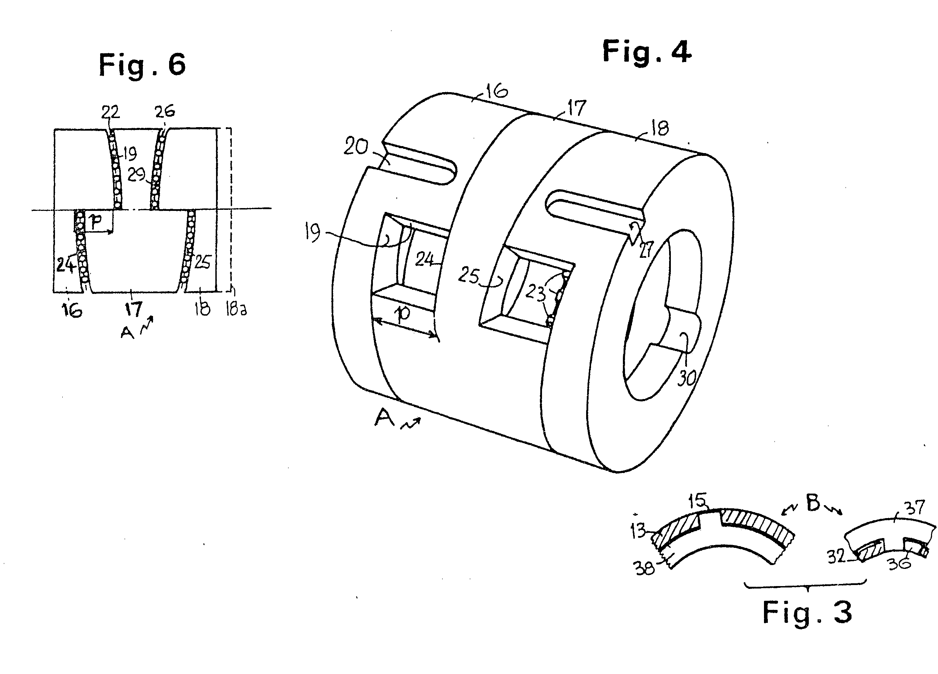

Conformément à l'invention, *le système A de cames-tambours* comporte trois cames-tambours 16, 17, 18 à quatre rampes hélicoïdales active conjuguées deux à deux (Fig. 4, 5, 6).

La première came-tambour 16 ou came-tambour de base, connue en soi, comporte une rampe hélicoïdale active 19 d'axe XX formant une surface orthogonale à l'axe XX, enroulée de 360° autour de cet axe, avec un pas $p$ visible par le décalage axial de la distance $p$ entre le début et la fin de ladite rampe, c'est-à-dire entre ses deux extrémités. La came-tambour 16 est complètement immobilisée, à la fois en translation puisqu'elle est emprisonnée entre l'élargissement ou épaulement du moyeu 13 et le couvercle 4a, et en rotation puisqu'elle comporte une encoche extérieure 20 dans laquelle pénètre sans jeu un ergot radial d'arrêt 21 traversant le boîtier 4, comme connu, une butée hélicoïdale à aiguilles 22 est appliquée contre la rampe hélicoïdale 19 et interposée entre la came-tambour de base 16 et la came-tambour adjacente 17.

La seconde came-tambour 17 ou came-tambour médiane rotative comporte intérieurement des cannelures 23 (Fig. 1 et 4) conjuguées des cannelures 14 du moyeu 13, et en prise sur celles-ci pour être entraînée en rotation par l'arbre moteur 12. La came-tambour 17 est munie de deux rampes hélicoïdales

symétriques 24 et 25 sur chacune de ses tranches d'extrémité. La rampe 24 est conjuguées de la rampe 19 dont elle est séparée par la butée à aiguilles 22 et est de même pas *p* et de même sens d'enroulement. La rampe symétrique 25 est de même pas, mais de sens d'enroulement inverse de celui des rampes 19 et 24. Une butée hélicoïdale à aiguilles 26 semblable à la butée 22 mais symétrique de celle-ci, donc de même pas et de sens d'enroulement contraire, est interposée entre la seconde came-tambour et la troisième came-tambour adjacente 18.

La seconde came-tambour 17 est montée rotative à l'intérieur du boîtier 4 lui servant d'alésage.

La troisième came-tambour 18 ou came-tambour de transformation et d'amplification de mouvement est immobilisée en rotation, mais non en translation dans le boîtier 4 par une encoche extérieure 27 rectiligne, allongée suivant une génératrice, dans laquelle est en prise un ergot radial d'arrêt 28. La came-tambour 18 peut coulisser en translation par rapport à l'ergot 28. Sur sa face en vis-à-vis de la deuxième came-tambour 17, la came-tambour 18 porte une rampe hélicoïdale 29 de même sens d'enroulement et de même pas que la rampe 25 de la came-tambour 17. Enfin, la came-tambour 18 porte une encoche intérieure 30 d'appui et d'arrêt en rotation que l'on reverra plus loin.

*L'ensemble B de rattrapage automatique d'usure des garnitures de friction* 9a, 9b, bien connu en soi, comporte les organes suivants (Fig. 1, 2, 3) qui sont, d'une manière originale et avantageuse, montés à l'intérieur des cames-tambours creuses 16, 17, 18:

— un système à vis 31 d'axe XX, solidaire en translation de la mâchoire mobile 8, et à écrou 32, permet, par rotation relative en sens unique, lorsque les garnitures 9a, 9b sont usées, de rattraper l'usure. Les filetages de la vis 31 et de l'écrou 32 sont irréversibles.

— un dispositif unidirectionnel que l'on verra plus loin permet la rotation de l'écrou 32 dans le sens de rattrapage mais interdit sa rotation en sens contraire.

La vis 31 est immobilisée en rotation par un moyen non représenté, par exemple par sa solidarisation avec la mâchoire 8. La vis 31 est libre en translation.

L'écrou 32 est pourvu d'une bride sur laquelle prend appui d'un côté la troisième came-tambour 18 et du côté opposé une plaque d'appui 33 et en ressort hélicoïdal 34 de rappel, lui-même appuyé sur un épaulement interne du boîtier 4. L'écrou 32, quand il ne tourne pas, est solidaire en translation de la vis 31. L'écrou 32 sert de support à un ressort hélicoïdal 35 de friction accroché par une extrémité sur l'encoche interne 30 de la came-tambour 18 qui l'immobilise en rotation. Le ressort 35 est enroulé de telle sorte que par sa déformation il autorise la rotation de l'écrou 32 dans un sens qui est celui du rattrapage d'usure mais il interdit la rotation de l'écrou 32 dans le sens inverse. Ainsi le ressort 35 est l'équivalent d'un embrayage unidirectionnel ou d'une roue libre.

En vue de son entraînement en rotation, l'écrou 32 (Fig. 2 et 3) comporte au moins deux fentes 36 dans lesquelles sont engagés avec battement les ergots radiaux internes, diamétralement opposés, d'un disque 37 qui est monté fou par rapport au moyeu 13 de l'arbre moteur 12. Le disque 37 est monté en sandwich entre deux disques de friction 38 coaxiaux, d'axe XX, à ergots radiaux externes engagés dans les fentes 15 du moyeu 13. Les disques de friction 38 sont montés fous par rapport à l'écrou 32. Un circlips 38a en prise sur le moyeu 13, sert d'appui à un disque 38. Un ressort 39 applique les disques 38 contre le disque intermédiaire 37 de telle manière que ce n'est que par friction des disques 37 et 38 que le moyeu 13 de l'arbre moteur 12 peut entraîner en rotation l'écrou 32. Le ressort 39 prend appui, d'un côté contre un disque 38, de l'autre contre le fond du moyeu 13.

Les disques 37 et 38 et le ressort 39 constituent par conséquent un embrayage à friction entre le moyen 13 et l'écrou 32.

Pour compléter la description du système B de rattrapage automatique d'usure, il y a lieu de préciser qu'une paire de fentes par exemple les fentes 36 sont plus larges que les ergots ou languettes correspondantes du disque 37 et comportent un battement correspondant à un jeu axial des garnitures 9a, 9b par rapport au disque 1.

Fonctionnement (Fig. 1, 2, 3, 5 et 6):

Soit à serrer les garnitures de friction 9a, 9b sur le disque 1. On supposera qu'aucun jeu n'est à rattraper étant donné que l'agencement et le fonctionnement du système B de rattrapage d'usure rappelé ci-dessus sont bien connus.

1°) *Frein desserré:*

A l'origine, le mécanisme de commande de freinage est en position desserrée, les garnitures de friction 9a, 9b supposées non usées étant écartées du disque 1 et le ressort de rappel 34 repoussant la plaque d'appui 33 contre la bride de l'écrou 32 elle-même appliquée contre la troisième came-tambour 18.

L'ensemble A des trois cames-tambours 16, 17, 18 est, du fait de la position du levier 11, en situation rétractée (Fig. 6). Les rampes 19, 24, 25, 29 sont en contact par leurs tranches planes d'extrémité à décalage suivant le pas *p*.

2°) *Serrage du frein:*

Le levier 11 est manoeuvré par le vérin 10 de manière à serrer les garnitures de friction 9a, 9b contre le disque de frein 1.

Le rotation du levier 11 entraîne celle de l'arbre 12, de son moyeu 13 et, par le jeu des cannelures 14 et 23 (Fig. 2), la rotation de la came-tambour médiane 17 par rapport à la première came-tambour 16 qui reste fixe. En glissant sur la butée à aiguilles 22, la rampe 24 de la came-tambour 17 se déplace par rapport à la rampe 19 de la came-tambour 16 de la position de la Fig. 6 à la position de la Fig. 5. Cette rotation d'une fraction de tour de la came-tambour 17 se traduit par un déplacement axial suivant l'axe XX de la came-tambour 17 d'une fraction du pas *p* des rampes hélicoîdales 19 et 24. L'autre rampe 25 de la came-tambour 17 se déplace ainsi d'une fraction de pas *p* tout en tournant et an glissant sur la butée à aiguilles 26 qui la sépare de la rampe 29 de la troisième came-tambour 18. Celle-ci est immobilisée en rotation par l'ergot 28 et l'encoche 27 mais peut coulisser axialement par rapport à l'ergot 28 gräce à ladite encoche 27. Il s'ensuit que le déplacement axial d'une fraction de pas *p* et la rotation de la rampe 24 entraînent un déplacement axial supplémentaire d'une fraction de pas *p* de la troisième came-tambour 18. Comme les rampes hélicoîdales 19, 24, 25, 29 sont, dans cet exemple, de même diamètre et de même pas d'enroulement, le déplacement axial simple de la came médiane d'entraînement 17 provoque un déplacement axial double de la came-tambour entraînée 18.

A son tour, le déplacement axial de la came-tambour 18, double de celui de la came-tambour 17 (la came-tambour 18 vient en position 18a représentée en trait interrompu à la Fig. 6), déplace la bride de l'écrou 32, la plaque d'appui 33, écrase le ressort de la plaque 34 et, par liaison irréversible de l'écrou 32 de la vis 31, déplace axialement la vis 31 de la même quantité que la came-tambour 18 et rapproche la mâchoire mobile 8 du disque de frein 1, serrant ainsi la garniture de friction 9b sur le disque 1. Comme l'étrier 3 est flottant, par réaction de la garniture 9a, il vient se centrer autour du disque 1, et le serrage est effectué.

3°) *Desserrage du frein:*

Pour revenir en position desserrée des freins, le ressort du vérin 10 ramène le levier 11 à sa position initiale. L'arbre 12 fait donc tourner le moyeu 13 et la came-tambour 17 en sens inverse par le jeu des cannelures 14 et 23. La came-tambour 17 se rapproche d'une fraction de´ pas *p* de la came-tambour 16, et la came-tambour 18, sous la pression du ressort de rappel 34 par l'intermédiaire de la plaque d'appui 33 de la bride de l'écrou 32, se rapproche à son tour de la came-tambour 17 pour revenir dans la position de la Fig. 6 en se déplaçant axialement deux fois plus que la came-tambour 17.

Dans cette translation en sens inverse d'une valeur double de celle de la came-tambour 17, l'écrou 32 entraîne suivant la même course axiale la vis 31 et celle-ci entraîne la mâchoire . mobile 8 qui s'éloigne du disque 1. L'étrier 3 flottant s'équilibre de part et d'autre du disque 1 et le frein se desserre.

Il est à note que s'il y avait eu usure des garnitures de frein 9a, 9b à rattraper, le système B aurait fonctionné de la manière suivante: au serrage, après une rotation de chaque ergot du disque 37 correspondant au battement des fentes 36 (Fig. 3) et butée de l'ergot contre un flanc actif de chaque fente 36, l'embrayage 37, 38 fait tourner l'écrou 32 et déplace ainsi la vis 31 et les garnitures 9a, 9b suivant un déplacement supplémentaire qui s'ajoute à celui obtenu par la poussée directe de la came-tambour 18 sur l'écrou 32.

Quand l'effort axial apparaît (contact des garnitures 9a, 9b avec le disque 1), l'embrayage 37, 38 patine et les cames-tambours continuent leur action de déplacement sur l'écrou 32 en vue du serrage.

Au desserrage, l'embrayage 37, 38 patine lorsque chaque ergot du disque 37 vient buter sur l'autre flanc actif de chaque fente 36, c'est-à-dire sur l'autre flanc de battement qui lui est permis. L'écrou 32 ne peut pas tourner car le ressort de roue libre 35 l'en empêche.

Avantages:

La présence des trois cames-tambours 16, 17, 18 et des quatre rampes 19, 24, 25 et 29 est avantageuse puis-qu'elle permet d'amplifier la course axiale de serrage des garnitures de frein 9a, 9b sans augmenter le pas des surfaces hélicoîdales ni l'angle de rotation du levier 11 par rapport à la technique connue. L'interposition des deux butées à aiguilles 22—26 entre les trois cames-tambours 16, 17, 18 permet de transmettre un sérieux effort axial.

Par ailleurs, la symétrie des rampes hélicoîdales 24 et 25 et des rampes 19 et 29 ainsi que des cames-tambours 16 et 18 présentent un avantage: celui de pouvoir inverser les rôles et positions des cames-tambours 16 et 18 en utilisant le mécanisme de l'invention sur un frein à gauche au lieu d'un frein à droite (roue opposée).

Enfin, le fait de loger le système B de rattrapage d'usure à l'intérieur des cames-tambours 16, 17, 18 au lieu de l'interposer entre la came-tambour 18 et l'écrou 32 à l'extérieur de la came-tambour 18 permet une sensible économie ou diminution d'encombrement axial.

**Revendications**

1. Mécanisme de commande de frein à disque à étrier flottant (3), ledit étrier (3) comportant une mâchoire fixe (7) portant une garniture (9a) de friction sur une face du disque (1) et une mâchoire mobile (8) portant une garniture (9b) de friction sur l'autre face du disque (1), ledit mécanisme comportant un levier moteur (11) articulé, une première came-tambour (16) fixe et une seconde came-tambour (17) présentant une première rampe hélicoîdale (24), entraînée en rotation par le levier (11) par rapport à une autre rampe hélicoîdale (19) conjuguée, formée par une surface de la première came-tambour (16), une butée à aiguilles (22) étant disposée entre les rampes hélicoîdales (19 et 24), la seconde came-tambour (17) déplaçant la garniture (9b) de friction vers le disque (1) à serrer par l'intermédiaire d'un système de rattrapage automatique d'usure (B) tandis que l'autre garniture (9a) de friction s'approche aussi du disque (1), caractérisé en ce qu'entre la seconde came-tambour (17) et le système de rattrapage automatique d'usure (B) est interposée une troisième came-tambour (18) symétrique de la première came-tambour (16), immobilisée en rotation et mobile en translation, cette troisième came-tambour (18) présentant une rampe hélicoïdale (29) conjuguée d'une seconde rampe hélicoïdale (25), symétrique et opposée à la première rampe (24), de la seconde came-tambour (17).

2. Mécanisme selon la revendication 1, caractérisé en ce que la seconde came-tambour (17), rotative, est pourvue de cannelures intérieures (23) coopérant avec des cannelures extérieures (14) d'un moyeu (13) solidaire d'un arbre de commande (12) actionné en rotation par un levier moteur (11).

3. Mécanisme selon l'une des revendications 1 et 2, caractérisé en ce que la première came-tambour (16) est immobilisée en rotation par un ergot radial (21) solidaire d'un boîtier (4a) du mécanisme et engagé dans une rainure longitudinale (20) de la came-tambour (16), orientée suivant une génératrice de la came-tambour cylindrique (16), et en ce que la première came-tambour (16) est immobilisée en translation entre un épaulement du boîtier (4a) du mécanisme et un épaulement compris entre l'arbre (12) et le moyeu (13) moteur.

4. Mécanisme selon l'une quelconque des revendications 1 à 3, caractérisé en ce que la troisième came-tambour (18) est immobilisée en rotation par un ergot radial (28) solidaire du boîtier (4) du mécanisme et engagé dans un rainure longitudinale (27) de cette came-tambour, orientée suivant une génératrice de celle-ci.

5. Mécanisme selon l'une quelconque des revendications 1 à 4, caractérisé en ce que la première came-tambour (16) présente une surface active transversale à l'axe (XX) de sa surface extérieure cylindrique, ladite surface transversale ayant la forme d'une rampe hélicoïdale (19) d'enroulement autour dudit axe (XX), enroulée de 360° autour de l'axe (XX) avec un pas (*p*) concrétisé par un décalage axial de la distance (*p*) entre le début et la fin de ladite rampe, c'est-à-dire entre ses deux extrémités.

6. Mécanisme selon l'une quelconque des revendications 1 à 5, caractérisé en ce que la seconde came-tambour (17) est pourvue de deux rampes hélicoïdales symétriques (24 et 25) sur chacune de ses tranches d'extrémité, orthogonales à l'axe (XX).

7. Mécanisme suivant la revendication 5, caractérisé en ce que la première rampe hélicoïdale (24) de la seconde came-tambour (17) est conjuguée de la rampe hélicoïdale (19) de la première came-tambour (16), de même pas (*p*) et de même sens d'enroulement autour de l'axe (XX).

8. Mécanisme suivant la revendication 5 caractérisé en ce que la seconde rampe hélicoïdale (25) de la seconde came-tambour (17) est de même pas mais de sens d'enroulement inverse de celui de la première rampe (24) de la seconde came-tambour (17) et de la rampe (19) de la première came-tambour (16).

9. Mécanisme selon l'une quelconque des revendications 1 à 8, caractérise en ce que la troisième came-tambour (18) est pourvue sur sa tranche d'extrémité en vis-à-vis de la seconde came-tambour (17) d'une rampe hélicoïdale (29) de même pas et de même sens d'enroulement que la seconde rampe (25) de la seconde came-tambour (17).

10. Mécanisme selon l'une quelconque des revendications 1 à 9, caractérisé en ce que des butées à aiguilles (22, 26) sont interposées entre respectivement les rampes hélicoïdales en vis-à-vis des cames-tambours (16 et 17, d'une part, 17 et 18, d'autre part), lesdites aiguilles étant montées dans des cages de roulement hélicoïdales de même pas et de même sens d'enroulement que, d'une part, les rampes hélicoïdales conjuguées (19 et 24) et, d'autre part, les rampes hélicoïdales conjuguées (25 et 29).

11. Mécanisme selon l'une quelconque des revendications 1 à 10, caractérisé en ce que la troisième came-tambour mobile en translation mais non en rotation (18) est pourvue d'une encoche intérieure (30) servant d'appui et d'arrêt en rotation d'un organe unidirectionnel (35) appartenant à un système (B) de rattrapage automatique d'usure.

12. Mécanisme selon l'une quelconque des revendications 1 à 11, caractérisé en ce que le système connu en soi (B) de rattrapage automatique d'usure des garnitures de friction (9a, 9b) est interposé entre le moyeu (13) d'un arbre moteur (12) actionné par le levier moteur (11) et la mâchoire mobile (8) portant une garniture de friction (9b) située au plus près dudit mécanisme de commande.

13. Mécanisme selon l'une quelconque des revendications 1 à 12, caractérisé en ce que le système de rattrapage automatique d'usure (B) constitué, comme connu en soi, par des moyens à vis (31)-écrou (32), un embrayage à friction (37, 38) entre un arbre moteur (12) et l'écrou (32), et un embrayage unidirectionnel (35) appliqué à l'écrou (32), est logé à l'intérieur des cames-tambours (16—17—18) qui sont creuses.

**Patentansprüche**

1. Betätigungsmechanismus für Scheibenbremsen mit schwimmend gelagertem Bügel (3), wobei der Bügel (3) eine feste Backe (7) umfasst, die eine Garnitur (9a), die gegen eine Fläche der Scheibe (1) reibt und eine bewegliche Backe (8) umfasst, die eine Garnitur (9b), die gegen die andere Fläche der Scheibe (1) reibt, trägt, wobei der Betätigungsmechanismus eine gelenkig gelagerten Antriebshebel (11), eine erste feste Nockentrommel (16) und eine zweite Nockentrommel (17) umfasst, die eine erste spiralförmige Rampe (24) aufweist und vom Hebel bezüglich einer anderen konjugierten spiralförmigen Rampe (19) in Drehung mitgenommen wird, wobei die Rampe durch eine Fläche der ersten Nockentrommel (16) gebildet ist, wobei ein Nadellager (22) zwischen den Spiralrampen (19 und 24) angeordnet ist und die zweite Nockentrommel (17) die Reibgarnitur (9b) gegen die zu beaufschlagende Scheibe (1) vermittels eines selbsttätigen Verschleissnachstellsystems (B) verschiebt, während die andere Reibgarnitur (9a) sich ebenfalls der Scheibe (1) nähert, dadurch gekennzeichnet, dass zwischen der zweiten Nockentrommel (17) und dem selbsttätigen Verschleissnachstellsystem (B) eine dritte zur ersten Nockentrommel (16) symmetrische Nockentrommel (18) zwischengeschaltet ist, die drehfest und in Translation beweglich ist, wobei die dritte Nockentrommel (18) eine spiralförmige Rampe (29) aufweist, die konjugiert zu einer zweiten Spiralrampe (25), symmetrisch und entgegengesetzt zur ersten Rampe (24) der zweiten Nockentrommel (17) ist.

2. Betätigungsmechanismus nach Anspruch 1, dadurch gekennzeichnet, dass die zweite drehbare Nockentrommel (17) mit Innenkannelierungen (23) versehen ist, die mit Aussenkannelierungen (14) einer fest mit einer Betätigungswelle (12) verbundenen Nabe (13) zusammenwirkt, welche unter Drehung durch einen Antriebshebel (11) betätigt wird.

3. Betätigungsmechanismus nach einem der Ansprüche 1 und 2, dadurch gekennzeichnet, dass die erste Nockentrommel (16) durch einen radialen Zapfen (21) drehfest gemacht ist, der fest mit einem Gehäuse (4a) des Betätigungsmechanismus verbunden ist und in eine Längsnut (20) der Nockentrommel (16) greift, die entsprechend einer Erzeugenden der zylindrischen Nockentrommel (16) orientiert ist und dass die erste Nockentrommel (16) translationsfest zwischen einer Schulter des Gehäuses (4a) des Betätigungsmechanismus und einer Schulter zwischen der Welle (12) und der Antriebsnabe (13) ist.

4. Betätigungsmechanismus nach einem der Ansprüche 1 bis 3, dadurch gekennzeichnet, dass die dritte Nockentrommel (18) durch einen Radialzapfen (28), der fest mit dem Gehäuse (4) des Betätigungsmechanismus verbunden ist, drehfest gemacht ist und in eine Längsnut (27) dieser Nockentrommel, die längs einer Erzeugenden hiervon orientiert ist, eingreift.

5. Betätigungsmechanismus nach einem der Ansprüche 1 bis 4, dadurch gekennzeichnet, dass die erste Nockentrommel (16) einer aktiven Fläche quer zur Achse (XX) ihrer zylindrischen Aussenfläche aufweist, wobei die Querfläche die Form einer spiralförmigen um

diese Achse (XX) sich wickelnden Rampe (19) besitzt, die über 360° um die Achse (XX) mit einer Steigung (p) gewickelt ist, die durch eine Axialverschiebung der Entfernung (p) zwischen Beginn und Ende dieser Rampe, d.h. zwischen ihren beiden Enden, konkretisiert ist.

6. Betätigungsmechanismus nach einem der Ansprüche 1 bis 5, dadurch gekennzeichnet, dass die zweite Nockentrommel (17) mit zwei spiralförmigen symmetrischen Rampen (24 und 25) auf jedem ihrer Endabschnitte orthogonal zur Achse (XX) versehen ist.

7. Betätigungsmechanismus nach Anspruch 5, dadurch gekennzeichnet, dass die erste spiralförmige Rampe (24) der zweiten Nockentrommel (17) konjugiert zur spiralförmigen Rampe (19) der ersten Nockentrommel (16) ausgebildet ist und gleichen Steigungssinn (p) und gleichen Wicklungssinn um die Achse (XX) aufweist.

8. Betätigungsmechanismus nach Anspruch 5, dadurch gekennzeichnet, dass die zweite spiralförmige Rampe (25) der zweiten Nockentrommel (17) von gleicher Steigung, jedoch von entgegengesetztem Wicklungssinn zu dem der ersten Rampe (24) der zweiten Nockentrommel (17) sowie der Rampe (19) der ersten Nockentrommel (16) ist.

9. Betätigungsmechanismus nach einem der Ansprüche 1 bis 8, dadurch gekennzeichnet, dass die dritte Nockentrommel (18) auf ihrem Endabschnitt gegenüber der zweiten Nockentrommel (17) mit einer spiralförmigen Rampe (29) gleicher Steigung und gleichen Wicklungssinnswie die zweite Rampe (25) der zweiten Nockentrommel (17) versehen ist.

10. Betätigungsmechanismus nach einem der Ansprüche 1 bis 9, dadurch gekennzeichnet, dass nadellager (22, 26) jeweils zwischen die Spiralrampen gegenüber den Nockentrommeln (16 und 17 einerseits, 17 und 18 andererseits) zwischengeschaltet sind, wobei die nadeln in Spiralwälzlagerkäfigen gleicher Steigung und gleichen Wicklungssinn wie einerseits die spiralförmigen konjugierten Rampen (19 und 24) und anderer andererseits die spiralförmigen konjugierten Rampen (25 und 29) gelagert sind.

11. Betätigungsmechanismus nach einem der Ansprüche 1 bis 10, dadurch gekennzeichnet, dass die dritte translatorisch jedoch nicht rotatorisch bewegliche Nockentrommel (18) mit einer Innenausnehmung (30) versehen ist, die als Stütze und Drehanschlag für ein in einer Richtung wirkendes Organ (35) dient und zu ein automatischen Verschleissnachstellsystem (B) gehört.

12. Betätigungsmechanismus nach einem der Ansprüche 1 bis 11, dadurch gekennzeichnet, dass das an sich bekannte selbsttätige Verschleissnachstellsystem (B) der Friktionsgarnituren (9a, 9b) zwischengeschaltet ist zwischen die Nabe (13) einer Antriebswelle (12), die durch den Antriebshebel (11) sowie die bewegliche Backe (8) betätigt ist, wobei letztere eine Reibgarnitur (9b) trägt, die möglichst nahe dem Betätigungsmechanismus sich befindet.

13. Betätigungsmechanismus nach einem der Ansprüche 1 bis 12, dadurch gekennzeichnet, dass das System zur selbsttätigen Verschleissnachstellung (B) in an sich bekannter Weise aus Schraub (31)-Mutter (32)-Einrichtungen, einer Reibkupplung (37, 38) zwischen einer Antriebswelle (12) und der Mutter (32) sowie einer in einer Richtung wirkenden die Mutter (32) beaufschlagenden Kupplung (35) besteht und im Innern der hohlen Nockentrommel (16—17—18) gelagert ist.

## Claims

1. Control mechanism of disc brake with floating stirrup (3), the said stirrup (3) consisting of a fixed jaw (7) carrying a friction pad (9a) on one face of the disc (1) and a moving jaw (8) carrying a friction pad (9b) on the other face of the disc (1) the said mechanism consisting of a hinged power lever (11), a first fixed cam-drum (16) and a second cam-drum (17) showing a helicoidal first ramp (24), brought into rotation by the lever (11) in relation to another coupled helicoidal ramp (19) formed by one surface of the first cam-drum (16) a needle bearing (22) being arranged between the helicoidal ramps (19 and 24), the second cam-drum (17) displacing the friction pad (9b) towards the disc (1) to be clamped by means of an automatic system for take-up of wear (B) whilst the other friction pad (9a) also approaches the disc (1) characterised by the fact that between the second cam-drum (17) and the automatic wear take up system (B) is arranged a third cam-drum (18), which is symmetrical with the first cam-drum (16), which is immobilised for rotation and mobile in translational movement, this third cam-drum (18) displaying a helicoidal ramp (29) coupled with a second helicoidal ramp (25), which is symmetrical to and opposite to the first ramp (24), of the second cam-drum (17).

2. Mechanism according to claim 1, characterised by the fact that the second cam-drum (17) which rotates, is provided with internal grooving (23) which works in conjunction with the external grooves (14) of a hub (13) which is integral with a control shaft (12) brought into rotation by a power lever (11).

3. Mechanism according to one of the claims 1 and 2, characterised by the fact that the first cam-drum (16) is immobilised for rotation by a radial lug (21) which is integral with a housing (4a) of the mechanism and engaged in a longitudinal groove (20) of the cam-drum (16) which is directed to follow a generatrix of the cylindrical cam-drum (16), and by the fact that the first cam-drum 16 is immobilised in translational movement between a shoulder of the housing (4a) of the mechanism and a shoulder between the shaft (12) and the power hub (13).

4. Mechanism according to any of claims 1—3, characterised by the fact that the third cam-drum (18) is immobilised for rotation by a radial lug (28) which is integral with the housing (4) of the mechanism and engaged in a longitudinal groove (27) of this cam-drum, directed to follow a generatrix of the latter.

5. Mechanism according to any of the claims 1—4, characterised by the fact that the first cam-drum (16) presents an active surface which is transversal to the axis (XX) of its cylindrical external surface, the said transversal surface having the shape of a helicoidal ramp (19) winding around the said axis (XX), wound by 360° around the axis (XX) with a spacing (P) which is made concrete by an axial shift of the distance (p) between the beginning and the end of the said ramp, that is, between its two ends.

6. Mechanism according to any of the claims 1—5, characterised by the fact that the second cam-drum (17) is provided with two helicoidal symmetrical ramps (24 and 25) on each of its end sections, which are orthogonal to the axis (XX).

7. Mechanism according to claim 5, characterised by the fact that the first helicoidal ramp (24) of the second cam-drum (17) is coupled with the helicoidal ramp (19) of the first cam-drum (16), of the same spacing (p) and the same direction of winding around the axis (XX).

8. Mechanism according to claim 5, characterised by the fact that the second helicoidal ramp (25) of the second cam-drum (17) is of the same spacing but of the opposite direction of winding to that of the first ramp (24) of the second cam-drum (17) and the ramp (19) of the first cam-drum (16).

9. Mechanism according to any of the claims 1—8, characterised by the fact that the third cam-drum (18) is provided on its end section facing the second cam-drum (17) with a helicoidal ramp (29) of the same spacing and the same direction of winding as the second ramp (25) of the second cam-drum (17).

10. Mechanism according to any of the claims 1—9, characterised by the face that needle bearings (22, 26) are interposed respectively between the helicoidal ramps facing the cam-drums (16 and 17 on the one hand, 17 and 18 on the other hand) the said needles being assembled in helicoidal bearing races of the same spacing and the same direction of winding as, on the one hand, the coupled helicoidal ramps (19 and 24) and, on the other hand, the coupled helicoidal ramps (25 and 29).

11. Mechanism according to any of the claims 1—10, characterised by the fact that the third cam-drum which is movable in translational movement but not in rotation (18) is provided with an internal slot (30) which serves as a support and stop for rotation of a unidirectional element (35) which belongs to a system (B) for automatic take-up of wear.

12. Mechanism according to any of the claims 1—11, characterised by the fact that the system known in itself (B) for automatic take up of wear of the friction pads (9a, 9b), is interposed between the hub (13) of a driving shaft (12) actuated by the power lever (11) and the movable jaw (8) which has a friction pad (9b) situated as close as possible to the said control mechanism.

13. Mechanism according to any of the claims 1—12, characterised by the fact that the system for automatic take-up of wear (B) which is known in itself, by means of a screw (31)-nut (32), a friction clutch (37, 38) between a driving shaft (12) and the nut (32), and a unidirectional clutch (35) applied to the nut (32), is housed inside the cam-drums (16, 17, 18) which are hollow.

Fig. 1

Fig. 5

Fig. 2

0008 452

# Fig. 6

22  26

19

29

P

24  25

16  17  18  18a

A

# Fig. 4

16

17

18

20

19

24

25

23

21

10

30

A

# Fig. 3

15  B

13  37

38  32  36

0 008 452

2